## Europäisches Patentamt
## European Patent Office
## Office européen des brevets

(19)

(11) Veröffentlichungsnummer: **0 175 159**
**B1**

(12) # EUROPÄISCHE PATENTSCHRIFT

(45) Veröffentlichungstag der Patentschrift:
13.01.88

(51) Int. Cl.⁴: **H 02 B 13/06**

(21) Anmeldenummer: **85110472.9**

(22) Anmeldetag: **20.08.85**

(54) Dreipoliges elektrisches Schaltfeld.

(30) Priorität: **04.09.84  DE 3432492**

(43) Veröffentlichungstag der Anmeldung:
**26.03.86 Patentblatt 86/13**

(45) Bekanntmachung des Hinweises auf die Patenterteilung:
**13.01.88 Patentblatt 88/2**

(84) Benannte Vertragsstaaten:
**CH DE FR GB IT LI NL SE**

(56) Entgegenhaltungen:
FR-A-1 348 593

(73) Patentinhaber: **Siemens Aktiengesellschaft Berlin und München, Wittelsbacherplatz 2, D-8000 München 2 (DE)**

(72) Erfinder: **Prohl, Robert, Weiherstrasse 54, D-6369 Nidderau 5 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 175 159 B1

**Beschreibung**

Die Erfindung bezieht sich auf ein dreipoliges elektrisches Schaltfeld nach dem Oberbegriff des Anspruches 1.

Es ist bereits ein dreipoliges elektrisches Schaltfeld der im Oberbegriff des Anspruches 1 genannten Art bekannt. Das bekannte Schaltfeld zeichnet sich unter anderem dadurch aus, daß der Strompfad bei jedem Pol zwischen dem Kabelanschluß und der Sammelschiene geradlinig verläuft und daher besonders kurz ist, im Gegensatz zu solchen Schaltanlagen, bei denen die Verbindung zwischen den jeweiligen Kabelanschlüssen und den diesen zugeordneten Sammelschienen gekrümmt oder abgewinkelt ist. Die bei dem bekannten Schaltfeld gewählte Feldteilung ist verhältnismäßig gering und hat sich bewährt. Die einzelnen Pole sind von der Schaltfeldfront her gesehen hintereinander angeordnet (DE-OS-28 18 905).

Aufgabe der Erfindung ist es, bei dem elektrischen Schaltfeld der im Oberbegriff des Anspruches 1 genannten Art die Zugängigkeit der beiden hinteren Pole einschließlich der diesen Polen zugeordneten Kabelanschlüsse zu verbessern.

Dabei soll die geradlinige Verbindung zwischen dem Kabelanschluß und der Sammelschiene jedes Pols, ferner der gegebene Abstand von Polmitte zu Polmitte sowie eine kleine Feldteilung beibehalten werden.

Die gestellte Aufgabe wird erfindungsgemäß durch die in kennzeichnenden Teil des Anspruches 1 angegebene Ausbildung gelöst.

Zweckmäßige Ausbildungen des Erfindungsgegenstandes sind in den Ansprüchen 2 und 3 angegeben.

Ein Ausführungsbeispiel der Erfindung ist in der Zeichnung rein schematisch dargestellt. Es zeigen:

Fig. 1 die Frontseite eines Schaltfeldes,

Fig. 2 eine Draufsicht nach Fig. 1.

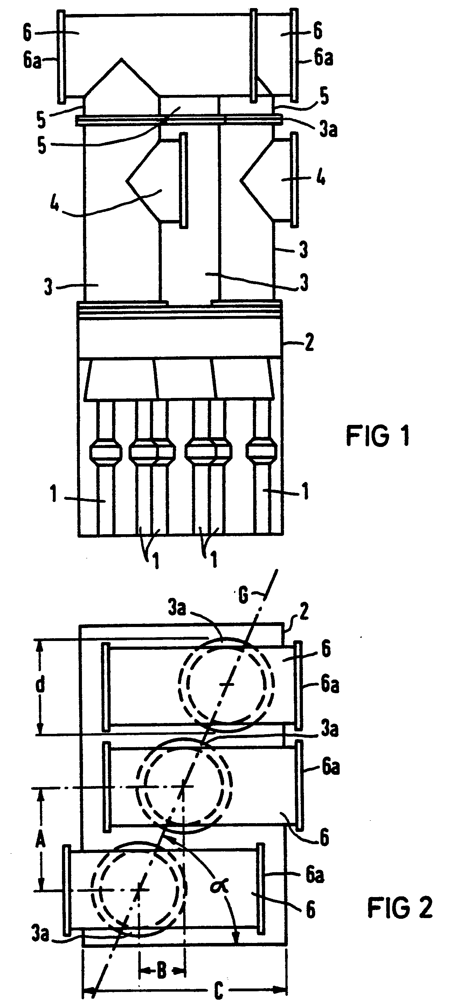

In der Zeichnung sind mit 1 Kabelanschlüsse bezeichnet (Fig. 1), die in einen Untergestell 2 untergebracht sind.

Das Untergestell 2 trägt drei untereinander gleiche aufrechtstehende Behälter 3 aus Metall, beispielsweise Aluminium.

Die Behälter 3 sind mit Isoliergas, wie $SF_6$ oder dergleichen, gefüllt und enthalten in nicht dargestellter Weise jeweils eine Leistungsschaltstelle, beispielsweise eine Vakuumschaltröhre.

An jeden Behälter 3 ist in rechten Winkel zu seiner Längsachse ein Stutzen 4 angeformt, der die Behälterlänge in einen längeren und einen kürzeren Abschnitt unterteilt, wie aus Fig. 1 ersichtlich.

Auf dem oberen Ende jedes der aufrechtstehenden Behälter 3 ist ein diesen Behälter 3 gleicher Behälter 6 angeordnet und zwar so, daß der mit 5 bezeichnete Stutzen jedes Behälters 6 auf dem oberen Ende des darunter angeordneten aufrechtstehenden Behälters 3 aufliegt (Fig. 1). An der Auflagestelle ist jeder Stutzen 5 mit den darunter befindlichen aufrechtstehenden Behälter 3 verbunden.

Die auf den aufrechtstehenden Behältern 3 angeordneten Behälter 6 liegen, wie dargestellt, jeweils parallel zur Schaltfeldfront, sind ebenfalls mit Isoliergas gefüllt und enthalten in nicht gezeigter Weise jeweils mindestens eine Sammelschiene und wahlweise einen Trennschalter.

Die Länge aller Behälter 3, 6 ist jeweils gleich der Feldbreite C (Fig. 2).

Die Aufrechtstehenden Behälter 3 sind in gleicher Richtung versetzt hintereinander angeordnet.

Der Versatz der aufrechtstehenden Behälter 3 ist so getroffen, daß der Tangens des Neigungswinkels $\alpha$ einer die Behälterachsen schneidenden Geraden G gegen die Feldfront gleich den Quotienten aus dem Polmittenabschnitt A zweier benachbarter querliegender Behälter 6 geteilt durch den auf die Feldfront projezierten Abstand B zweier benachbarter aufrechtstehender Behälter 3 ist. Zweckmäßig ist ein Neigungswinkel von 60°.

Unabhängig vom Neigungswinkel $\alpha$ sind einer der äußeren oberen Behälter 6, im dargestellten Beispiel der hintere Behälter 6, und der mittlere obere Behälter 6 so angeordnet, daß die Enden dieser beiden Behälter 6 miteinander fluchten. Als weitere Anordnungsbedingung für diese beiden oberen Behälter 6 gilt, daß jeweils der kürzere Abschnitt des einen Behälters 6 den längeren Abschnitt des anderen Behälters 6 gegenüberliegt (Fig. 2).

Der weitere obere Behälter 6, in dargestelltem Beispiel der vordere obere Behälter 6, ist zum mittleren Behälter 6 gleichgerichtet angeordnet, das heißt, der kürzere Abschnitt des weiteren oberen Behälters 6 liegt, allerdings versetzt, den kürzeren Abschnitt des mittleren oberen Behälters 6 gegenüber, dessen längerer Abschnitt somit, ebenfalls versetzt, den längerem Abschnitt des weiteren oberen Behälters 6 gegenüberliegt.

Zweckmäßig ist der Polmittenabstand A mindestens gleich dem Durchmesser d an die Behälter 3, 6 angeformter Flansche 3a, 6a.

Es ist ferner zweckmäßig, den auf die Feldfront projezierten Abstand B zweier benachbarter aufrechtstehender Behälter 3 so zu bemessen, daß er gleich oder größer 0,5 mal dem Durchmesser d der Behälterflansche 3a, 6a ist.

**Patentansprüche**

1. Dreipoliges elektrisches Schaltfeld, mit den Merkmalen:

auf einen Kabelanschlüsse (1) enthaltenden Untergestell (2) sind drei untereinander gleiche Behälter (3) aufrechtstehend, angeordnet;

die Behälter (3) bestehen aus Metall, sind mit Isoliergas gefüllt, enthalten jeweils eine Leistungsschaltstelle und sind von der Feldfront aus gesehen in gleichen Abständen hintereinander angeordnet; an jedem der Behälter (3) ist in rechten Winkel zur Längsachse ein Stutzen (4) angeformt, der die Behälterlänge in einem längeren und einen kürzeren Abschnitt unterteilt;

die oberen Enden der aufrechtstehenden Behälter (3) sind jeweils mit einem Stutzen (5) eines ihnen gleichen oberen Behälters (6) verbunden, der parallel zur Feldfront liegt, ebenfalls mit Isoliergas gefüllt ist und mindestens eine Sammelschiene sowie wahlweise einen Trennschalter enthält; die Länge jedes Behälters (3, 6) ist gleich der Feldbreite (C);

gekennzeichnet durch die Merkmale:
die aufrechtstehenden Behälter (3) sind gleichsinnig versetzt hintereinander angeordnet;

der Tangens des Neigungswinkels α einer die Behälterachsen schneidenden Geraden (G) gegen die Feldfront ist bestimmt durch den Quotienten aus dem Polmittenabschnitt (A) zweier benachbarter, querliegender Behälter (6) geteilt durch den auf die Feldfront projizierten waagrechten Abstand (B) zweier benachbarter aufrechtstehender Behälter (3); einer der äußeren oberen Behälter (6) und der mittlere obere Behälter (6) sind so angeordnet, daß die Enden beider Behälter (6) miteinander fluchten, wobei jeweils der kürzere Abschnitt des einen Behälters (6) dem längeren Abschnitt der anderen Behälters (6) gegenüberliegt;

der weitere obere äußere Behälter (6) ist hinsichtlich seines kürzeren und längeren Abschnittes gleichsinnig zum mittleren oberen Behälter (6) angeordnet.

2. Schaltfeld nach Anspruch 1, dadurch gekennzeichnet, daß der Polmittenabschnitt (A) mindestens gleich dem Durchmesser (d) an die Behälter (3, 6) angeformter Flansche (3a, 6a) und der auf die Feldfront projizierte waagrechte Abstand (B) zweier benachbarter aufrechtstehender Behälter (3) gleich oder größer 0,5 mal dem Durchmesser (d) der Behälterflansche (3a, 6a) ist.

3. Schaltfeld nach Anspruch 1 und 2, dadurch gekennzeichnet, daß der Neigungswinkel α 60° beträgt.

## Claims

1. A three-pole electrical switching array having the following features:
three containers (3) identical with one another, are arranged vertically on a frame (2) which contains cable terminals (1); the containers (3) consist of metal, are filled with insulating gas, each contain a power switching point and, considered from the front of the array, are arranged in series at equal intervals;

a connection (4) which divides the length of the container into a longer and a shorter section is formed on each of the containers (3) at right angles to its longitudinal axis;

the upper ends of the vertical containers (3) are in each case connected through a connecting piece (5) of an identical upper container (6) which is arranged parallel to the front of the array, is likewise filled with insulating gas and contains at least one busbar and optionally an isolating switch;

the length of each container (3, 6) is equal to the width of the array (C);

characterised by the following features:
the vertical containers (3) are arranged one behind another offset in series;

the tangent of the angle of inclination α of a straight line (G) intersecting the container axes, with the front of the array is determined by the quotient of the pole centre section (A) of two adjacent, transverse containers (6) divided by the horizontal spacing (B), projected to the front of the array, of two adjacent vertical containers (3);

one of the outer upper containers (6) and the central upper container (6) are so arranged that the ends of the two containers (6) are in alignment, the shorter section of the one container (6) is in each case being arranged opposite the longer section of the other container (6);

the other outer container (6) faces in the same direction as regards its shorter and longer sections, as the upper central container (6).

2. A switching array as claimed in Claim 1, characterised in that the pole centre section (A) is at least equal to the diameter (d) of the flanges (3a, 6a) which are formed on the containers (3, 6), and the horizontal distance (B) between two adjacent vertical containers (3), projected towards the front of the array, is equal to or 0.5 times greater than the diameter (d) of the container flanges (3a, 6a).

3. A switching array as claimed in Claim 1 and 2, characterised in that the angle of inclination α is 60°.

## Revendications

1. Panneau de commutation électrique tripolaire, présentant les caractéristiques:
trois logements identiques (3) sont disposés verticalement sur un support (2) contenant des raccords (1) pour câbles; les logements (3) sont réalisés en métal, sont remplis par un gaz isolant, contiennent respectivement un point de coupure de l'énergie et sont disposés les une derrière les autres à une même distance, lorsqu'on regarde à partir de l'avant du panneau;

sur chacun des logemetns (3) se trouve formée par façonnage, à angle droit par rapport à l'axe longitudinale, une tubulure (4) qui subdivise la longueur du logement en une section longue et une section courte;

les extrémités supérieures des logements verticaux (3) sont reliées respectivement à une tubulure (5) d'un logement supérieur (6) identique aux autres logements et qui est parallèle à la face avant du panneau, est également rempli d'un gaz isolant et contient au moins une barre omnibus ainsi que, en option, un sectionneur;

la longueur de chaque logement (3, 6) est égale à la largeur (C) du panneau;

caractérisé par les moyens particuliers suivants:

les logements verticaux (3) sont disposés les une derrière les autres en étant décalés dans le même sens;

la tangente de l'angle d'inclinaison (α) d'une droite G passant par les axes des logements par rapport à la face avant du panneau est déterminée par le rapport de la distance (A) entre les centres des pôles de deux logements voisins (6) disposés transversalement, à la distance horizontale (B), projetée sur la face avant du panneau, de deux logements verticaux (3) voisins;

l'un des logements supérieurs extérieurs (6) et le logement supérieur médian (6) sont disposés de telle sorte que les extrémités des deux logements (6) sont alignées réciproquement, la section courte d'un logement (6) étant située en vis-à-vis de la section longue de l'autre logement (6); l'autre logement extérieur supérieur (6) est disposé, pour ce qui concerne sa section courte et sa section longue, dans le même sens que le logement supérieur médian (6).

2. Panneau de commutation suivant la revendication 1, caractérisé par le fait que la distance (A) entre les centres des pôles est égale au moins au diamètre (I) de la bride (3a, 6a) formée par façonnage sur les logements (3, 6) et la distance horizontale (B), projetée sur la face avant du panneau, de deux logements verticaux (3) voisins est égale ou supérieure à 0,5 fois le diamètre (d) de la bride (3a, 6a) du logement.

3. Panneau de commutation suivant les revendications 1 et 2, caractérisé par le fait que l'angle d'inclinaison (α) est égal à 60°.

FIG 1

FIG 2